# EUROPEAN PATENT SPECIFICATION

(11) **EP 1 557 340 B1**
(45) Date of publication and mention of the grant of the patent: **22.04.2009**
(21) Application number: 03784591.4
(22) Date of filing: 07.08.2003
(51) Int. Cl.: B62D 25/12, B62D 25/10, B60R 21/34

(54) **HOOD LOCK STRIKER**
SCHLIESSBLECH FÜR EIN HAUBENSCHLOSS
GACHE D'UN ELEMENT DE VERROUILLAGE D'UN CAPOT

(30) Priority: 08.08.2002 JP 2002231018
(43) Date of publication of application: 27.07.2005
(73) Proprietor: DAIHATSU MOTOR COMPANY, LTD., Ikeda-shi, Osaka-fu 563-8651 (JP)
(72) Inventor: ISHII, Yoshizumi, c/o DAIHATSU MOTOR CO., LTD, Ryuo-cho, Gamo-gun, Shiga 520-2531 (JP)
(74) Representative: Pluckrose, Anthony William
(86) International application number: PCT/JP2003/010099
(87) International publication number: WO 2004/014714

(56) References cited:
- EP-A1- 0 713 820
- DE-A1- 10 141 628
- JP-A- 11 321 714
- JP-A- 2002 037 129
- JP-B2- 3 075 372
- JP-U- 63 057 420
- JP-Y2- 6 031 076
- US-B1- 6 415 882

## Description

### TECHNICAL FIELD

The present invention relates to a hood lock striker attached to an engine hood (bonnet) of a car. The present invention also relates to an assembly of an engine hood and a hood lock striker. DE 101 41 628 A1 discloses a hood loch striker assembly according to the preamble of claim 1.

### BACKGROUND ART

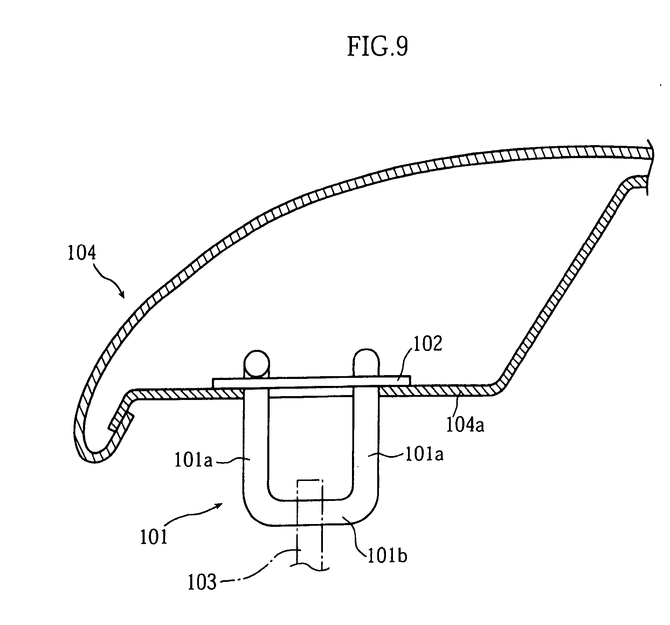

Fig. 9 illustrates an example of a conventional hood lock striker. The illustrated hood lock striker 101 engages with a hood lock 103 provided at a car body. The striker 101 is fixed to a plate 102 by welding for example, while the plate is attached to an inner panel 104a of an engine hood 104. The striker 101 includes a pair of vertical portions 101a extending heightwise of the car and a horizontal portion 101b connecting the vertical portions. The vertical portions 101a are spaced from each other in lengthwise direction of the car. The hood 104 is fixed to the car body by engaging the horizontal portion 101b with the lock 103.

Such fixation of the hood 104 and the car body should not be released during driving. Thus, the striker 101 is strengthened by increasing its diameter for example, so that it is not deformed by the wind pressure acting on the hood 104 or by the impact due to the vertical movement of the car.

However, the conventional striker 10 has problems as described below.

As described above, the striker 101 is strengthened. Further, the vertical portions 101a are attached perpendicularly to the inner panel 104a. With such an arrangement, the striker 101 is not easily deformed by the load from above. Suppose that the car accidentally collides head-on with a pedestrian, for example. If the pedestrian is pressed against the hood 104 in the accident, the striker 101 may fail to reliably absorb the pressing impact because of its hard-to-deform structure.

### DISCLOSURE OF THE INVENTION

According to the present invention, there is provided an assembly comprising a hood lock striker and an engine hood. The striker includes an engaging portion for engaging with a hood lock and a pair of generally V-shaped inclined portions extending from the engaging portion. Each inclined portion includes a top end attached to a hood by a bolt and a nut. The hood is formed with a bolt hole for inserting the shaft of the bolt and with a slit communicating with the bolt hole. The slit has a width smaller than a diameter of the shaft of the bolt.

Preferably, the hood is formed with an opening which communicates with the slit and is larger in size than the bolt hole.

### BRIEF DESCRIPTION OF THE DRAWINGS

Fig. 1 is a side view illustrating a hood lock striker according to the present invention.
Fig. 2 is an exploded perspective view illustrating a fixing manner of the striker and an engine hood shown in Fig. 1.
Fig. 3 is a view illustrating an example of an opening formed at the engine hood.
Fig. 4 is a front view illustrating the function of the striker.
Fig. 5 is a view illustrating an example of fixing manner of the striker and the engine hood.
Figs 6 and 7 are views illustrating a hood lock striker not forming part of the present invention.
Fig. 8, not forming part of the present invention, is a view illustrating a modified example of the striker shown in Fig. 6.
Fig. 9 is a side view illustrating a conventional hood lock striker.

### BEST MODE FOR CARRYING OUT THE INVENTION

The present invention is described below referring to the accompanying drawings.

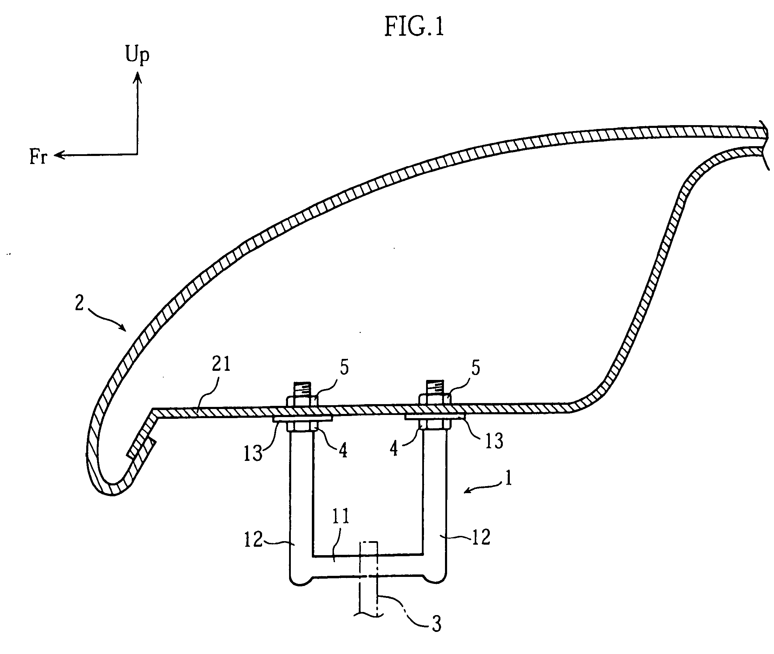

In Fig. 1, an arrow Fr indicates the front side of a car, and an arrow Up indicates the upside of a car.

The illustrated hood lock striker 1 is fixed to a front portion of an inner panel 21 of an engine hood 2 via bolts 4 and nuts 5. The striker 1 engages with a hood lock 3 provided at a radiator support (not shown).

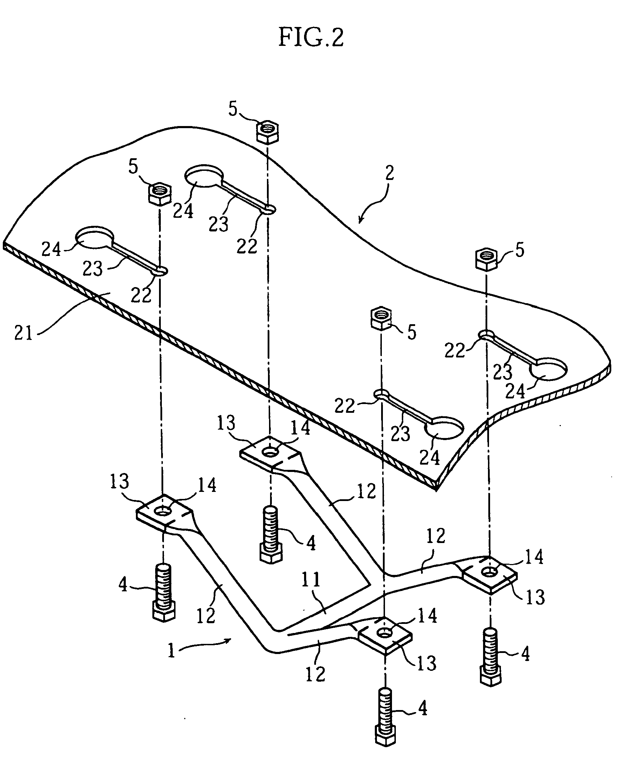

The striker 1 is used for fixing the hood 2 to the car body and includes an engaging portion 11 for engaging with the lock 3. The engaging portion 11 extends lengthwise of the car. The engaging portion 11 includes ends each formed with a pair of inclined portions 12 extending obliquely upward to be V-shaped (see Fig. 2). Each inclined portion 12 includes a flat top end 13 at which a through-hole 14 is formed for insertion of the bolt 4.

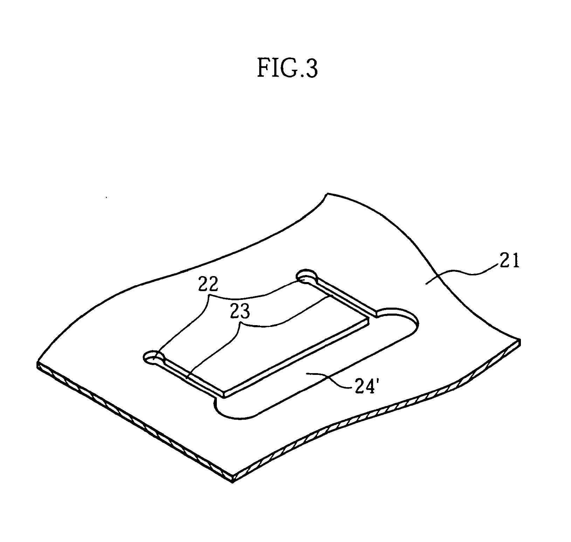

As shown in Fig. 2, the inner panel 21 is formed with bolt holes 22 which are coaxial with the through-holes 14 formed at the top ends 13. Each bolt hole 22 communicates with an end of a slit 23 which outwardly extends widthwise of the car. The other end of the slit 23 communicates with an opening 24. The width of the slit 23 is smaller than the diameter of the shank of the bolt 4. The size of the opening 24 is larger than the size of the nut 5. As shown in Fig. 3, two adjacent slits 23 may communicate with each other through one elongated opening 24'.

Fixing of the striker 1 to the hood 2 by bolts 4 and nuts 5 is performed in a manner such that the top ends 13 abut on the inner panel 21. In this state, as shown in Fig. 2, the bolt 4 is inserted into the through-hole 14 and into the bolt hole 22.

Next, the function of the above-described hood lock striker 1 is described.

Normally, the hood 2 is pressed against the car body to engage the striker 1 and the lock 3 so that the hood 2 is fixed to the car body. The engagement of the striker 1 and the lock 3 is released by operating a release knob (not shown) provided in the car.

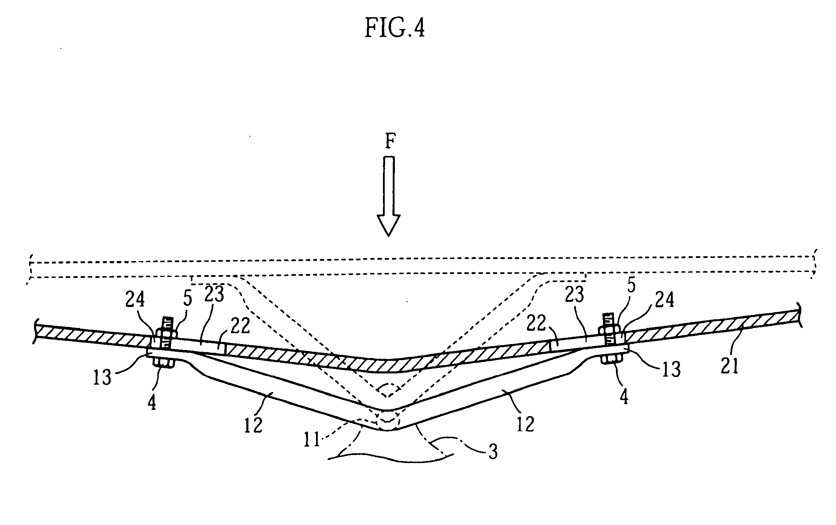

If the car collides with a pedestrian, the striker 1 may receive a large load F from above. Generally, the radiator support to which the lock 3 is attached is made of a rigid material, and therefore the lock 3 will not be largely deformed downward by the load F. On the other hand, as described above, the striker 1 includes the inclined portions 12 extending widthwise of the car from the ends of the engaging portion 11. With such an arrangement, the striker 1 is pressed toward the radiator support when the load F is applied, and the top ends 13 of the inclined portions 12 receive outward force applied widthwise of the car. Due to this force, the fixed bolt 4 is released and as shown by solid lines in Fig. 4, the striker 1 is outwardly deformed widthwise of the car, as its top ends 13 move together with the bolts 4 and the nuts 5.

The above deformation of the striker 1 occurs easily due to the slit 23 which is formed on the inner panel 21 and extends from the bolt hole 22 in the moving direction of the top end 13. Such deformation effectively absorbs the impact of the load F. Further, since the width of the slit 23 is smaller than the diameter of the shank of the bolt 4, the bolt 4 expands the width of the slit 23 while moving. In this way, the impact energy is partly consumed. In addition, since the nut 5 falls from the opening 24 when the top end 13 comes to the opening 24, the hood 2 is easily deformed under the load F, which contributes to impact absorption.

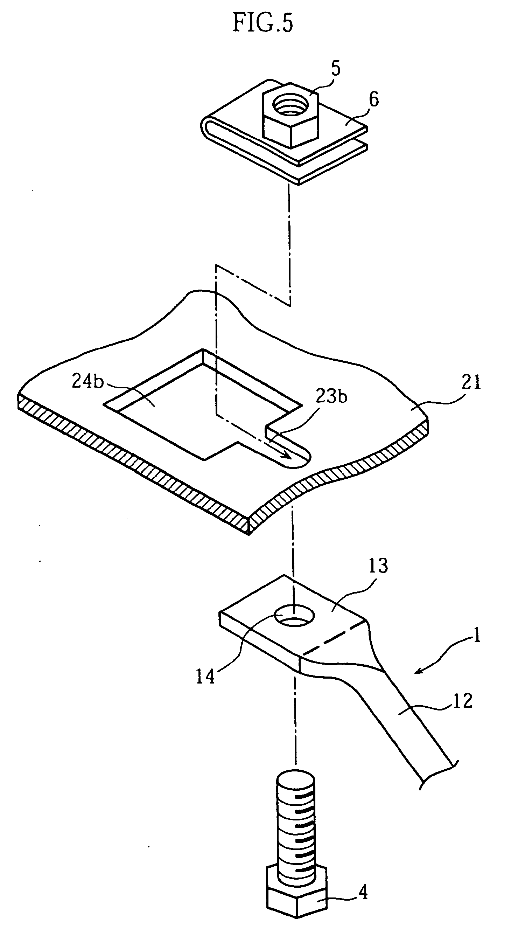

Fig. 5 shows an example of means for fixing the striker 1 to the inner panel 21. Specifically, the inner panel 21 is formed with a slit 23b serving as a bolt hole and a rectangular opening 24b which communicates with the slit. An attachment 6 is attached to the inner panel 21 to cover the slit 23b. The attachment 6 is formed with a hole (not shown) in which the shaft of the bolt 4 is inserted. After the attachment 6 is attached to the panel 21, the striker 1 is fixed to the panel 21 through the bolt 4 and the nut 5. The size of the opening 24b is larger than the size of the attachment 6. With such an arrangement, when a load larger than a predetermined value is applied from above the striker 1, the top end 13 of the striker 1 together with the attachment 6 is detached from the inner panel 21b.

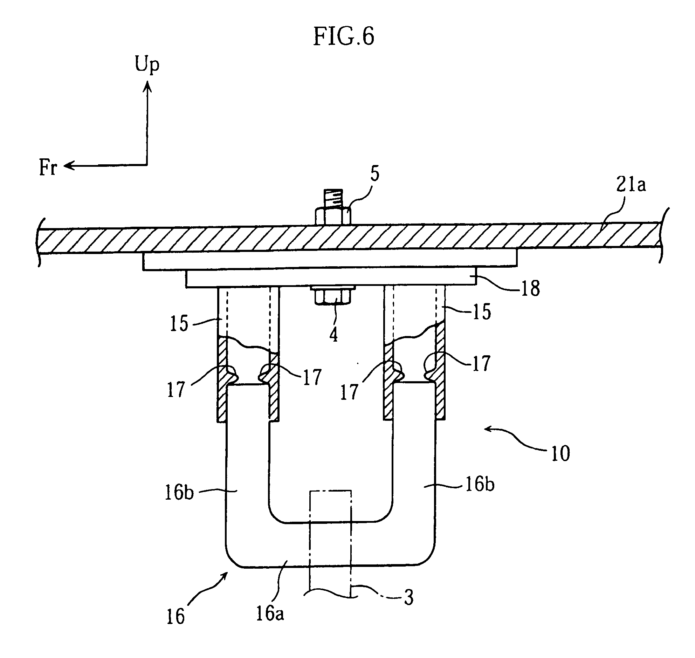

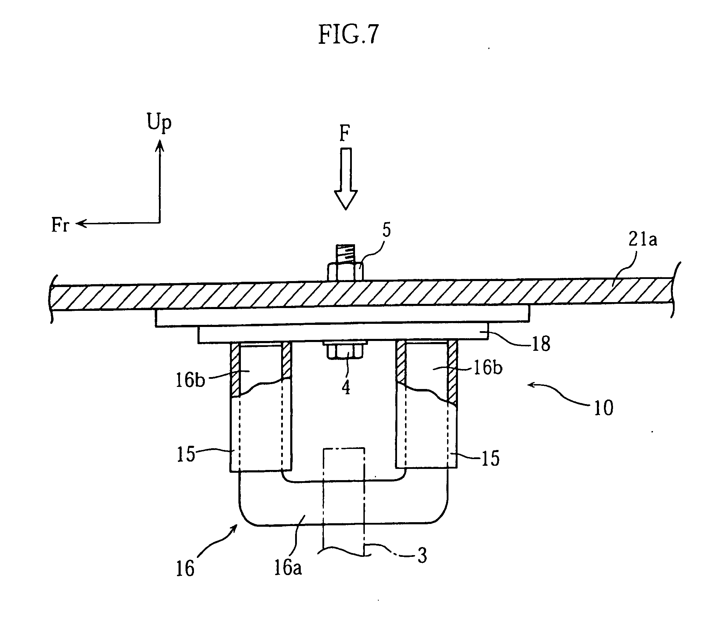

Figs. 6 and 7 show a lock striker not forming part of the present invention In these figures, elements identical or similar to those described above are indicated by the same reference numbers.

As shown in Fig. 6, the striker 10 according to the second embodiment includes a generally U-shaped engaging member 16 and a pair of cylindrical holders 15 cooperating with the engaging member. The holders 15 are fixed to a plate 18 so as to be spaced from each other lengthwise of the car. The plate 18 is fixed to an inner panel 21a by a bolt 4 and a nut 5.

The engaging member 16 includes a horizontal portion 16a and a pair of vertical portions 16b. As shown in Fig. 6, each vertical portion 16b is fitted into a corresponding holder 15. The holder 15 includes an inner surface which is formed with an annular protrusion 17 abutting on the vertical portion 16b. The top end of the vertical portion 16b and the plate 18 is spaced from each other by a predetermined distance. In this state, the engaging member 16 is welded to the holder 15. The annular protrusion 17 may be replaced with a plurality of protrusions.

The striker 10 having above-described structure functions as below. As shown in Fig. 7, when a relatively large load F is exerted from above the inner panel 21a, the welding connection of the holder 15 and the engaging member 16 is broken, and the protrusion 17 is rolled out (or scraped off) by the vertical portion 16b, whereby the vertical portion 16b is moved deep into the holder 15. Such movement of the engaging member 16b of the striker 10 absorbs the impact of the load F.

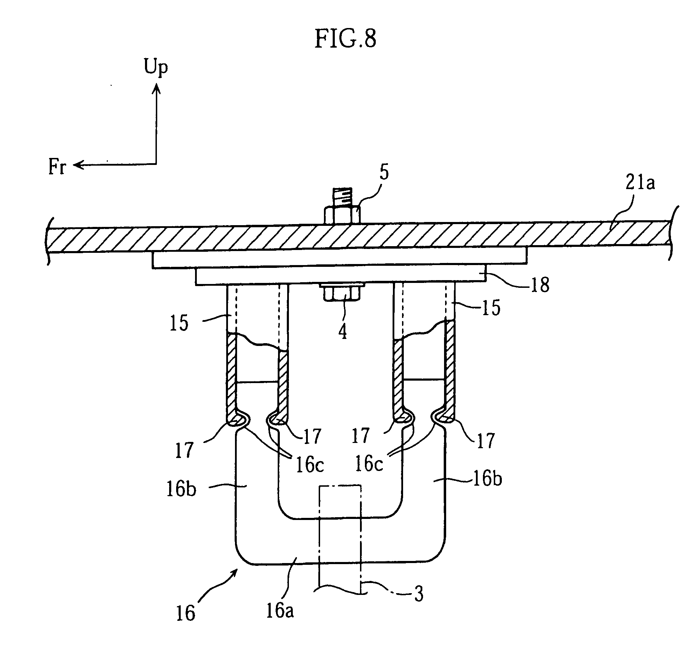

The arrangements shown in Fig. 8 are identical to the ones shown in Fig. 6 except for the feature described below. According to the arrangements shown in Fig. 8, an annular protrusion 17 is formed at the lower end of each holder 15. Further, each vertical portion 16b of the striker is formed with an annular recess 16c, and the annular recess 16c engages with the protrusion 17 of the holder. Such an arrangement also contributes to the absorption of the load impact acting on the engine hood.

## Claims

1. An assembly comprising a hood lock striker (1) and an engine hood (2), wherein the striker (1) includes an engaging portion (11) for engaging with a hood lock (3) and a pair of generally V-shaped inclined portions (12) extending from the engaging portion (11), each inclined portion (12) having a top end (13) attached to the hood (2) by a bolt (4) and a nut (5); **characterised in that**
the hood (2) is formed with a bolt hole (22) for inserting a shaft of the bolt (4) and with a slit (23) communicating with the bolt hole (22), the slit having a width smaller than a diameter of the shaft of the bolt (4).

2. The assembly according to claim 1, wherein the hood (2) is formed with an opening (24) which communicates with the slit (23) and is larger in size than the bolt hole (22).

## Patentansprüche

1. Anordnung umfassend einen Haubenschloss-Schließbügel (1) und eine Motorhaube (2), wobei der Schließbügel (1) ein kuppelndes Teil (11) zum Kuppeln mit einem Haubenschloss (3) und ein Paar von im Wesentlichen V-förmig geneigten Teilen (12) beinhaltet, die sich von dem kuppelnden Teil (11) erstrecken, wobei jedes geneigte Teil (12) ein oberes Ende (13) aufweist, das an der Haube (2) mittels einer Schraube (4) und einer Mutter (5) befestigt ist, **dadurch gekennzeichnet,**
**dass** die Haube (2) mit einem Schraubenloch (22) zum Einbringen eines Schafts der Schraube (4) und mit einem Schlitz (23) ausgebildet ist, der mit dem Schraubenloch (22) in Verbindung steht, wobei der Schlitz eine geringere Breite als der Durchmesser des Schafts der Schraube (4) aufweist.

2. Anordnung nach Anspruch 1, in der die Haube (2) mit einer Öffnung (24) ausgebildet ist, die mit dem Schlitz (23) in Verbindung steht und in ihrer Abmessung größer ist als das Schraubenloch (22).

## Revendications

1. Ensemble comprenant une gâche de verrou de capot (1) et un capot de moteur (2), dans lequel la gâche (1) comporte une partie de couplage (11) destinée à s'assembler avec un verrou de capot (3) et une paire de parties inclinées sensiblement en forme de "V" (12) s'étendant à partir de la partie de couplage (11), chaque partie inclinée (12) comportant une extrémité supérieure (13) fixée sur le capot (2) par une vis (4) et un écrou (5) ; **caractérisé en ce que**
le capot (2) comporte un orifice de vis (22) destiné à insérer une tige de la vis (4) et une fente (23) communiquant avec l'orifice de vis (22), la fente présentant une largeur inférieure au diamètre de la tige de la vis (4).

2. Ensemble selon la revendication 1, dans lequel le capot (2) comporte une ouverture (24) qui communique avec la fente (23) et est de taille supérieure à celle de l'orifice de vis (22).
